# EUROPÄISCHE PATENTANMELDUNG

(11) **EP 0 795 979 A2**
(43) Veröffentlichungstag der Anmeldung: **17.09.1997**
(21) Anmeldenummer: 97101090.5
(22) Anmeldetag: 24.01.1997
(51) Int. Cl.: H04L 9/32

(54) **Verfahren und Anordnung zum Nachweis des Zeitpunktes der Durchführung eines kryptographischen Prozesses**

(30) Priorität: 16.03.1996 DE 19610401
(71) Anmelder: Deutsche Telekom AG, 53113 Bonn (DE)
(72) Erfinder: Huber, Klaus, Dr. Ing., 64283 (DE); Tönsing, Friedrich, Dr., 64739 Höchst (DE)

(57) **Zusammenfassung**

Bei einem Verfahren zum Nachweis des Zeitpunktes der Durchführung einer Transaktion oder der Erstellung, der Signatur, der Übersendung und/oder des Empfangs eines Dokuments ist vorgesehen, daß eine Zeitmarkierung fälschungssicher in das Dokument aufgenommen wird und daß die Zeitmarkierung einer Zeitangabe entspricht, die einer nicht verstellbaren Uhr entnommen wird.

## Beschreibung

Die Erfindung betrifft ein Verfahren und eine Anordnung zum Nachweis des Zeitpunktes der Durchführung eines kryptographischen Prozesses.

Moderne Verfahren der Kommunikationstechnik, wie beispielsweise die digitale bzw. elektronische Unterschrift, erlauben es, die Authentizität und Integrität von Dokumenten auf verschiedene Arten zu gewährleisten. Einschlägige Verfahren sind beispielsweise in dem Buch W. Fumy, H.P. Rieß: Kryptographie, 2. Auflage, Oldenbourg Verlag, 1994 beschrieben. Auf diese Weise ist es möglich, Dokumente gegen Fälschung abzusichern. Derzeit gängige Verfahren zur Erzeugung von elektronischen Unterschriften arbeiten oft mit Chipkarten, in denen auslessicher ein geheimer Schlüssel sowie ein kryptographischer Prozessor enthalten ist. Ein verbreitetes Verfahren ist das sogenannte RSA-Verfahren, das in R.L. Rivest, A. Shamir, L. Adleman: A Method for Obtaining Digital Signatures and Public Key Cryptosystems, Communications of the ACM, Vol. 21 Nr. 2, pp. 120-126, Feb. 1978 beschrieben ist.

Häufig ist bei Dokumenten mit rechtlich bedeutsamem Inhalt, wie beispielsweise Transaktionen oder Aufträgen, beispielsweise im Wertpapierhandel, der Zeitpunkt der Erstellung, der Unterschrift oder der Versendung eines Dokumentes von Bedeutung.

Aufgabe der vorliegenden Erfindung ist es, ein Verfahren und eine Anordnung anzugeben, mit welcher der Zeitpunkt zur Durchführung eines kryptographischen Prozesses, wie beispielsweise die elektronische Unterschrift eines Dokuments, die Erstellung, die Absendung oder der Empfang eines Dokuments oder die Durchführung einer Transaktion, fälschungssicher dokumentiert werden kann. Dabei soll sichergestellt sein, daß auch die das Dokument erstellende oder unterschreibende Person den Zeitpunkt nicht verfälschen kann.

Diese Aufgabe wird bei einem Verfahren zum Nachweis des Zeitpunktes der Durchführung einer Transaktion dadurch gelöst, daß eine Zeitmarkierung fälschungssicher in ein die Transaktion betreffendes Dokument aufgenommen wird und daß die Zeitmarkierung einer Zeitangabe entspricht, die einer nicht verstellbaren Uhr entnommen wird.

Bei einem Verfahren zum Nachweis des Zeitpunktes der Erstellung, der Signatur, der Übersendung und/oder des Empfangs eines Dokuments wird die erfindungsgemäße Aufgabe dadurch gelöst, daß eine Zeitmarkierung fälschungssicher in das Dokument aufgenommen wird und daß die Zeitmarkierung einer Zeitangabe entspricht, die einer nicht verstellbaren Uhr entnommen wird.

Das erfindungsgemäße Verfahren kann bei allen Dokumenten angewendet werden, die in Form einer Datei vorliegen, erstellt, unterzeichnet oder anderweitig verarbeitet werden. Durch die fälschungssichere Aufnahme der Zeitmarkierung in das Dokument wird eine nachträgliche Verfälschung der einmal richtig vorgenommenen Zeitmarkierung vermieden. Beispiele für die Anwendung des erfindungsgemäßen Verfahrens sind Transaktionen, wie beispielsweise Geldabheben an einem Geldautomaten, und der Zeitpunkt, zu dem ein Telefongespräch

Die Zeitmarkierung kann bei dem erfindungsgemäßen Verfahren aus einer Datumsangabe, einer Datums- und Uhrzeitangabe in üblicher Form (Jahr, Monat, Tag, Uhrzeit) bestehen oder in einer codierten Form vorliegen, beispielsweise als Zählwert einer Uhr, welche beginnend an einem definierten Zeitpunkt lediglich Taktperioden eines Quarzgenerators zählt, ohne diese in die üblichen Zeiteinheiten zu codieren.

Als nicht verstellbare Uhr kommt bei dem erfindungsgemäßen Verfahren eine ganggenaue Uhr, vorzugsweise eine Quarzuhr, oder eine Funkuhr in Frage. Letztere hat zwar den Vorteil, daß auch langfristig eine hohe Ganggenauigkeit gewährleistet ist und daß sich nach einem Batteriewechsel wieder die richtige Zeitangabe einstellt, könnte jedoch von außen bei Anwendung entsprechender technischer Mittel beeinflußt und damit verfälscht werden.

Um dieses zu verhindern, ist bei einer Weiterbildung des erfindungsgemäßen Verfahrens vorgesehen, daß eine weitere Zeitangabe einer ganggenauen Uhr, vorzugsweise einer Quarzuhr, entnommen wird, daß beide Zeitangaben miteinander verglichen werden und daß bei einem Zeitunterschied, der größer als ein vorgegebener Zeitunterschied ist, keine Zeitmarkierung erzeugt und/oder eine Fehlermeldung ausgegeben wird. Vorzugsweise wird bei einem Zeitunterschied, der kleiner als der vorgegebene Zeitunterschied ist, die Zeitangabe der Funkuhr für die Zeitmarkierung verwendet.

Der Zeitunterschied kann dabei so gewählt werden, daß bei gegebener Genauigkeit der Quarzuhr der Zeitunterschied innerhalb der anzunehmenden Betriebszeit nicht größer als der vorgegebene Zeitunterschied wird. Der vorgegebene Zeitunterschied sollte jedoch in einer Größenordnung verbleiben, welche zum Nachweis des Zeitpunktes unkritisch ist. Dann würde eine Abweichung der Zeitangabe der Funkuhr nicht stören, wenn dabei der Zeitunterschied unter dem vorgegebenen bleibt. Bei einer Verfälschung um einen größeren Zeitunterschied ist jedoch eine Erstellung der Zeitmarkierung nicht mehr möglich. Gegebenenfalls kann eine geeignete Fehlermeldung, beispielsweise durch Ausdruck eines Protokolls, vorgesehen sein, das auf diesen Umstand hinweist.

Bei einer Weiterbildung der Erfindung ist vorgesehen, daß zusätzlich eine Ortsmarkierung in das Dokument aufgenommen wird, die von einem Ortungssystem erzeugt wird.

Die nicht verstellbare Uhr und gegebenenfalls das Ortungssystem können bei dem erfindungsgemäßen Verfahren auch dadurch realisiert werden, daß die Zeitangabe und gegebenenfalls die Ortsmarkierung von mindestens einer entfernt angeordneten Einrichtung kryptographisch gesichert übertragen werden.

Bei einer Anordnung zum Nachweis des Zeitpunktes der Durchführung einer Transaktion ist erfindungsgemäß vorgesehen, daß eine Zeitangabe, die als Zeitmarkierung fälschungssicher in ein die Transaktion betreffendes Dokument aufgenommen wird, einer nicht verstellbaren Uhr entnehmbar ist.

Eine Anordnung zum Nachweis des Zeitpunktes der Erstellung, der Signatur, der Übersendung und/oder des Empfangs eines Dokuments ist erfindungsgemäß derart ausgebildet, daß eine Zeitmarkierung fälschungssicher in das Dokument aufgenommen wird und daß die Zeitmarkierung einer Zeitangabe entspricht, die einer nicht verstellbaren Uhr entnommen wird.

Vorzugsweise ist dabei vorgesehen, daß die Uhr mit einer autarken Stromquelle außer für die Abfrage der Zeitangabe unzugänglich in einem Kryptomodul angeordnet ist.

Ein Kryptomodul, das Speicher enthält, die gegen Veränderungen von außen geschützt sind, kann in verschiedener Form ausgeführt sein. Bei der erfindungsgemäßen Anordnung ist vorzugsweise vorgesehen, daß das Kryptomodul eine Chipkarte ist.

Das Kryptomodul kann eine ganggenaue Uhr, vorzugsweise eine Quarzuhr, oder eine Funkuhr enthalten. Zur Erhöhung der Sicherheit können auch sowohl eine ganggenaue Uhr als auch eine Quarzuhr in dem Kryptomodul vorgesehen sein.

Zur Erhöhung der Sicherheit gegenüber Verfälschungen der Zeitmarkierung kann bei der erfindungsgemäßen Anordnung vorgesehen sein, daß eine weitere Zeitangabe einer ganggenauen Uhr, vorzugsweise einer Quarzuhr, entnehmbar ist, daß beide Zeitangaben miteinander verglichen werden und daß bei einem Zeitunterschied, der größer als ein vorgegebener Zeitunterschied ist, keine Zeitmarkierung erzeugt und/oder eine Fehlermeldung ausgegeben wird.

Vorzugsweise wird bei einem Zeitunterschied, der kleiner als der vorgegebene Zeitunterschied ist, die Zeitangabe der Funkuhr für die Zeitmarkierung verwendet.

Eine Weiterbildung der erfindungsgemäßen Anordnung besteht darin, daß in einem Kryptomodul ein Ortungsgerät, vorzugsweise ein GPS-Empfänger, angeordnet ist, dem die jeweilige Ortsangabe zur Bildung einer in das Dokument aufzunehmenden Ortsmarkierung entnehmbar ist.

Die nicht verstellbare Uhr und gegebenenfalls das Ortungssystem können bei dem erfindungsgemäßen Verfahren auch dadurch realisiert werden, daß die Zeitangabe und gegebenenfalls die Ortsmarkierung von mindestens einer entfernt angeordneten Einrichtung kryptographisch gesichert übertragen werden.

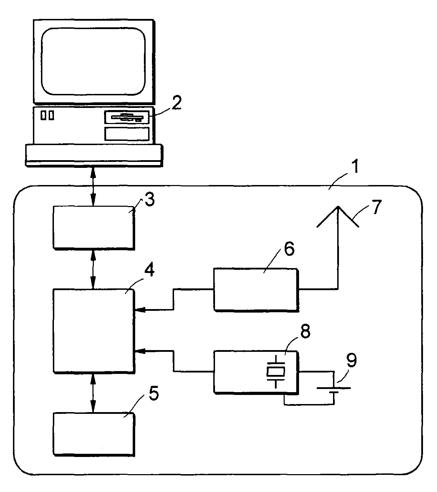

Ein Ausführungsbeispiel der Erfindung ist in der Zeichnung dargestellt und in der nachfolgenden Beschreibung näher erläutert.

Bei dem dargestellten Ausführungsbeispiel ist ein Kryptomodul 1 mit einem Computer 2 verbunden, in welchem Dokumente erstellt oder bearbeitet werden. Das Kryptomodul 1 enthält eine Schnittstelle 3 zur Verbindung des Computers 2 mit dem Prozessor 4 des Kryptomoduls. In einem Speicher 5 sind Algorithmen und Konstanten zur Verschlüsselung, zur Bildung einer elektronischen Unterschrift und zur Erzeugung von Zeitmarkierungen, die in das Dokument eingefügt werden, abgelegt.

Der Prozessor 4 ist ferner mit einer Funkuhr 6 verbunden, die über eine Antenne 7 Signale eines Zeitzeichensenders empfängt. Ferner ist an dem Prozessor 4 eine Quarzuhr 8 angeschlossen, die von einer Batterie 9 ständig in Betrieb gehalten wird.

In an sich bekannter Weise wird ein im Computer 2 erstelltes Dokument mit Hilfe des Prozessors 4 vor dem Absenden verschlüsselt und gegebenenfalls unterschrieben. Das Absenden kann beispielsweise über eine nicht dargestellte Schnittstelle des Computers 2 und ein Telekommunikationsnetz erfolgen. Bei dem dargestellten Ausführungsbeispiel werden zum Einfügen einer Zeitmarkierung die Uhren 6, 8 abgefragt. Beide Zeitangaben werden verglichen. Falls der Zeitunterschied kleiner als ein vorgegebener Wert ist, wird die Zeitangabe der Funkuhr 6 als Zeitmarkierung dem Dokument hinzugefügt und anschließend gemeinsam mit dem Dokument verschlüsselt und gegebenenfalls unterschrieben.

## Patentansprüche

1. Verfahren zum Nachweis des Zeitpunktes der Durchführung einer Transaktion, dadurch gekennzeichnet, daß eine Zeitmarkierung fälschungssicher in ein die Transaktion betreffendes Dokument aufgenommen wird und daß die Zeitmarkierung einer Zeitangabe entspricht, die einer nicht verstellbaren Uhr entnommen wird.

2. Verfahren zum Nachweis des Zeitpunktes der Erstellung, der Signatur, der Übersendung und/oder des Empfangs eines Dokuments, dadurch gekennzeichnet, daß eine Zeitmarkierung fälschungssicher in das Dokument aufgenommen wird und daß die Zeitmarkierung einer Zeitangabe entspricht, die einer nicht verstellbaren Uhr entnommen wird.

3. Verfahren nach einem der Ansprüche 1 oder 2, dadurch gekennzeichnet, daß die Uhr eine ganggenaue Uhr, vorzugsweise eine Quarzuhr, ist.

4. Verfahren nach einem der Ansprüche 1 oder 2, dadurch gekennzeichnet, daß die Uhr eine Funkuhr ist.

5. Verfahren nach Anspruch 4, dadurch gekennzeichnet, daß eine weitere Zeitangabe einer ganggenauen Uhr, vorzugsweise einer Quarzuhr, entnommen wird, daß beide Zeitangaben miteinander verglichen werden und daß bei einem Zeitunterschied, der größer als ein vorgegebener Zeitunterschied ist, keine Zeitmarkierung erzeugt und/oder eine Fehlermeldung ausgegeben wird.

6. Verfahren nach Anspruch 5, dadurch gekennzeichnet, daß bei einem Zeitunterschied, der kleiner als der vorgegebene Zeitunterschied ist, die Zeitangabe der Funkuhr für die Zeitmarkierung verwendet wird

7. Verfahren nach einem der vorhergehenden Ansprüche, dadurch gekennzeichnet, daß zusätzlich eine Ortsmarkierung in das Dokument aufgenommen wird, die von einem Ortungssystem erzeugt wird.

8. Verfahren nach einem der vorhergehenden Ansprüche, dadurch gekennzeichnet, daß die Zeitangabe und gegebenenfalls die Ortsmarkierung von mindestens einer entfernt angeordneten Einrichtung kryptographisch gesichert übertragen werden.

9. Anordnung zum Nachweis des Zeitpunktes der Durchführung einer Transaktion, dadurch gekennzeichnet, daß eine Zeitangabe, die als Zeitmarkierung fälschungssicher in ein die Transaktion betreffendes Dokument aufgenommen wird, einer nicht verstellbaren Uhr (6, 8) entnehmbar ist.

10. Anordnung zum Nachweis des Zeitpunktes der Erstellung, der Signatur, der Übersendung und/oder des Empfangs eines Dokuments, dadurch gekennzeichnet, daß eine Zeitmarkierung fälschungssicher in das Dokument aufgenommen wird und daß die Zeitmarkierung einer Zeitangabe entspricht, die einer nicht verstellbaren Uhr (6, 8) entnommen wird.

11. Anordnung nach einem der Ansprüche 9 oder 10, dadurch gekennzeichnet, daß die Uhr (8) mit einer autarken Stromquelle (9) außer für die Abfrage der Zeitangabe unzugänglich in einem Kryptomodul (1) angeordnet ist.

12. Anordnung nach Anspruch 11, dadurch gekennzeichnet, daß das Kryptomodul (1) eine Chipkarte ist.

13. Anordnung nach einem der Ansprüche 9 bis 12, dadurch gekennzeichnet, daß die Uhr eine ganggenaue Uhr, vorzugsweise eine Quarzuhr (8), ist.

14. Anordnung nach einem der Ansprüche 9 bis 12, dadurch gekennzeichnet, daß die Uhr eine Funkuhr (6) ist.

15. Anordnung nach Anspruch 14, dadurch gekennzeichnet, daß eine weitere Zeitangabe einer ganggenauen Uhr, vorzugsweise einer Quarzuhr (8), entnehmbar ist, daß beide Zeitangaben miteinander verglichen werden und daß bei einem Zeitunterschied, der größer als ein vorgegebener Zeitunterschied ist, keine Zeitmarkierung erzeugt und/oder eine Fehlermeldung ausgegeben wird.

16. Anordnung nach Anspruch 15, dadurch gekennzeichnet, daß bei einem Zeitunterschied, der kleiner als der vorgegebene Zeitunterschied ist, die Zeitangabe der Funkuhr (6) für die Zeitmarkierung verwendet wird

17. Anordnung nach einem der Ansprüche 9 bis 16, dadurch gekennzeichnet, daß in einem Kryptomodul ein Ortungsgerät, vorzugsweise ein GPS-Empfänger, angeordnet ist, dem die jeweilige Ortsangabe zur Bildung einer in das Dokument aufzunehmenden Ortsmarkierung entnehmbar ist.

18. Anordnung nach einem der Ansprüche 9 bis 17, dadurch gekennzeichnet, daß die Zeitangabe und gegebenenfalls die Ortsmarkierung von mindestens einer entfernt angeordneten Einrichtung kryptographisch gesichert übertragen werden.
